# EUROPEAN PATENT APPLICATION

(11) **EP 1 563 978 A1**
(43) Date of publication of application: **17.08.2005**
(21) Application number: 04075417.8
(22) Date of filing: 10.02.2004
(51) Int. Cl.: B29C 45/14, B65D 25/20

(54) **In-mould labels in plastic crates**

(71) Applicant: D.W. PLASTICS, naamloze vennootschap, 3740 Bilzen-Beverst (BE)
(72) Inventor: Isenborghs, Francis, 1350 Jauche (BE)
(74) Representative: Beitsma, Gerhard Romano

(57) **Abstract**

A method of producing a plastic crate (1) provided with at least one in-mould label (9) comprises the step of placing the at least one label against a wall part (12) of a mould (10). If the mould (10) comprises at least one wall part (12) which extends in two intersecting planes so as to defme a corner (15) of the mould, the label (9) may cover a comer of the resulting crate. The wall part (12) may define a right angle or an acute angle, or may even be rounded. The mould may be comprised of a single circumferentially closed wall part.

## Description

The present invention relates to in-mould labels in plastic crates. More in particular, the present invention relates to a plastic crate, such as a bottle crate, provided with an in-mould label.

It is well known to provide plastic crates with so-called in-mould labels: labels that are placed in the mould before injection moulding the crate. International Patent Application WO 00/42591 (D W Plastics) discloses labels of this type. The labels may carry text and/or drawings and may serve to identify the contents of the crate or to display commercial messages.

Labels may be applied on one or more side walls of a crate, typically the two longer side walls of a rectangular crate. In most crates, the side walls are flat, thus defining a planar labelling surface. Even when a side wall has a raised part, as disclosed in German Patent Application DE 198 44 183, the side walls are essentially planar and each label therefore extends in substantially the single plane defined by the single side wall on which it is applied. As a result, the size of the labels is limited by the dimensions of the individual side walls.

It is an object of the present invention to overcome these and other problems of the Prior Art and to provide a method of producing a plastic crate in which a label is not confined to a single side wall.

It is another object of the present invention to provide a mould for producing a plastic crate in which a label is not confined to a single side wall, as well as a crate thus produced.

Accordingly, the present invention provides a method of producing a plastic crate provided with at least one label, the method comprising the steps of:
- placing the at least one label against a wall part of a mould,
- closing the mould,
- injecting a plastic material into the mould, and
- opening the mould,
wherein the mould comprises at least one wall part which extends in two intersecting planes so as to allow the at least one label to cover a corner of the crate.

By providing a wall part that extends in two intersection planes and thus defines a corner of the mould, a label may be in-moulded that extends over and covers the corresponding corner of the crate.

It is noted that it would be possible to apply a "corner label" using regular (planar) mould walls that join at a corner. However, it would only be possible to place the label in the mould after joining the wall parts, thus making the positioning of the label more difficult. In addition, any slight movement of the wall parts relative to each other could cause the label to tear. Also, any seam between the wall parts underneath a label may remain visible after the moulding of the crate. It will therefore be understood that providing "comer mould wall parts" which support a "comer label" over its entire surface offers significant advantages over using conventional moulds.

In a first embodiment, the two intersecting planes are arranged at a right angle, so as to defme a rectangular corner, as in typical bottle crates. In a second embodiment, however, the two intersecting planes are arranged at an acute or obtuse angle so as to define an acute or obtuse corner of the mould and hence of the crate. This second embodiment allows alternative crate shapes, for example hexagonal or octagonal.

In a third embodiment, the at least one wall part is substantially rounded. In this embodiment, the wall part may still defme a corner of a substantially rectangular crate, or the wall part may define a rounded (e.g. semi-circular) section of a substantially cylindrical crate. It will be understood that a rounded corner may still be said to extend in two intersecting planes, the planes at least being tangent to the rounded corner.

The method may involve a single corner part of the mould wall. However, in an advantageous embodiment the mould comprises two wall parts which each extend in two intersecting planes so as to provide two labels covering respective corners of the crate.

In an advantageous embodiment of the inventive method the mould comprises a single, circumferentially closed wall part. This allows a crate to be produced that has a single label that envelops the circumference of the crate. The closed wall part may be rectangular, polygonal or rounded, and may in certain embodiments be cylindrical.

The present invention further provides a mould for use in the method as defined above. Such a mould, which is preferably made of metal, may comprise one or more corner parts.

The present invention further provides a crate produced according to the method defmed above. Such a crate may advantageously be a bottle crate but is not so limited.

The present invention will further be explained below with reference to exemplary embodiments illustrated in the accompanying drawings, in which:
Fig. 1 schematically shows, in perspective, a mould for producing a plastic crate according to the Prior Art.
Fig. 2 schematically shows, in perspective, a first embodiment of a mould according to the present invention.
Fig. 3 schematically shows, in perspective, a second embodiment of a mould according to the present invention.
Fig. 4 schematically shows, in perspective, a third embodiment of a mould according to the present invention.
Fig. 5 schematically shows, in perspective, a fourth embodiment of a mould according to the present invention.
Fig. 6 schematically shows, in perspective, a plastic crate produced in accordance with the present invention.

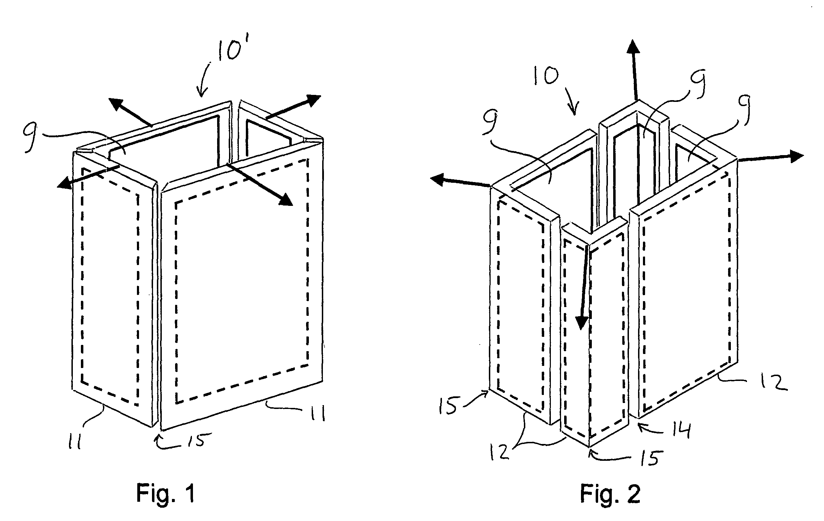

The Prior Art mould 10' shown in Fig. 1 comprises four essentially planar mould walls 11 which define a rectangular mould having four corners 15, where the walls join. In-mould labels 9 may be applied on each of the walls 11. As can be seen, each wall 11 constitutes a side wall, front wall or back wall of the mould 10' and comprises a single wall part.

When producing a crate or similar product, labels are applied on one or more of the wall parts (or sections) 11 which are joined and placed on a mould base (not shown in Fig. 1). The labels are typically made of a plastic (for example polyethylene) film and may be held in the mould using air pressure or other known techniques. A mould cover (not shown in Fig. 1) is then placed on top of the mould 10'. Both the mould base and the mould cover may have suitable protrusions for defining the interior of the crate.

A suitable plastic material, such as liquid HDPE (high density polyethylene) is then injected into the mould through injection openings which may be provided in the walls, the cover and/or the base. Due to the heat of the plastic material, the labels bond with the crate material. After the plastic material of the crate has solidified sufficiently, the mould is opened and the crate is taken out. The arrows indicate the directions in which the walls 11 may be removed.

As can be seen from Fig. 1, the mould 10' of the Prior Art is only suitable for applying labels that each extend over (part of) a side wall.

The mould 10 according to the present invention and shown merely by way of non-limiting example in Fig. 2 comprises several wall sections 12 that, in the embodiment shown, all extend in more than one plane. In the example of Fig. 2, the wall sections 12 all defme a corner 15 of the mould as they all extend in two orthogonal directions, that is, in the length and the width of the crate. This design allows labels to be in-moulded at the corners, producing a crate having labels that cover one or more of its corners.

Producing a crate using the mould 10 of Fig. 1 is similar to the exemplary Prior Art method discussed above, but for the shape of the mould sections which allow labels to be applied at corners. As can be seen, four labels 9 may be applied, but it will be understood that this number is largely arbitrary and that fewer than four may be applied, for example two. Any of the labels applied is fully supported by a respective wall part 12 and does not cover any of the seams 14 between the wall sections.

The plastic material is preferably injected from below, in a direction parallel to the plane(s) defined by the label so as to minimize any detrimental effect of the flow of plastic material. More in particular, injecting the plastic material parallel to the labels reduces any abrasion of the labels due to the flow of molten plastic. As a result, relatively thin and flexible labels may be used.

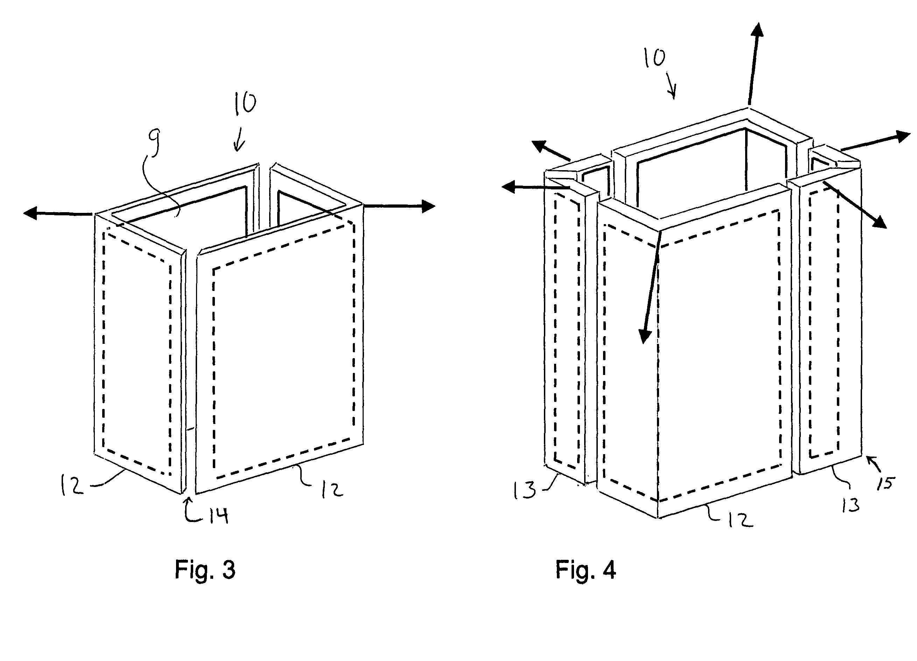

Instead of four wall sections 12, only two may be used that join at corners, as shown in Fig. 3. The embodiment of Fig. 3, which has the advantage of consisting of relatively few parts, allows two labels to be applied, each label extending over both a side wall and a front or back wall of the crate. It will be understood that the wall sections 12 shown in Fig. 3 may also be used to apply conventional labels on one face of the crate only.

The embodiment of Fig. 3 offers the additional advantage of having only two seams 14. This allows only two labels 9 to cover all four walls of the mould 10 and hence of the resulting crate. As the two labels may be identical, only one type of label is required to offer a very large label area and thereby a high visibility of the messages on the labels.

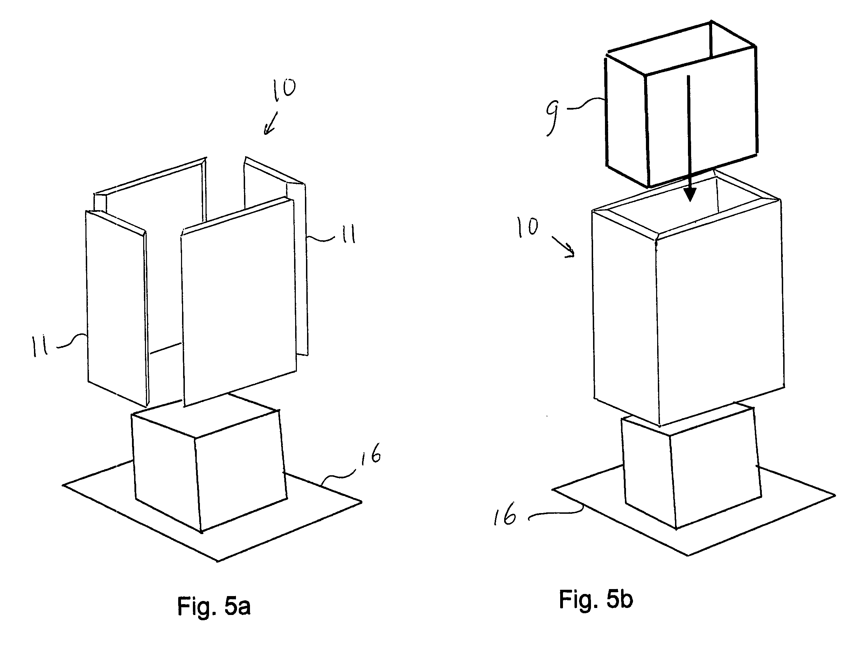

In the example of Fig. 4, some corner wall sections 11 and some more conventional wall sections 13 are used, the wall sections 13 having tapered edges joining at a corner 15. Wall parts according to the present invention may thus be combined with conventional wall parts.

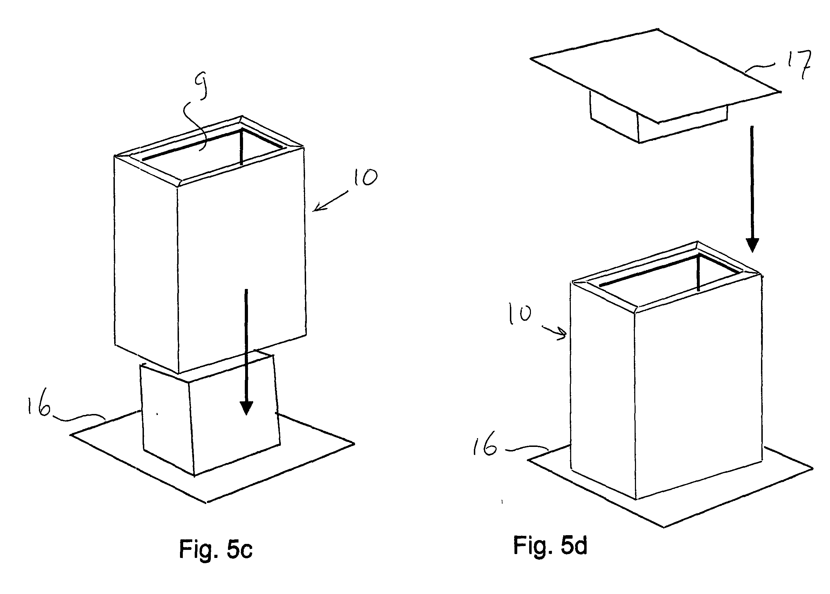

An alternative embodiment of the present invention is schematically shown in Figs. 5a-d, where a method is illustrated for applying a label circumferentially. In a first step shown in Fig. 5a mould walls 11 are assembled to form a circumferentially closed mould 10. The assembly of the walls 11 may be temporary of permanent. In a second step shown in Fig. 5b a label 9 is inserted in the mould 10 and held against the walls 11, for instance by air pressure (suction) or a (temporary) adhesive. The mould 10 is placed on a mould base 16, as shown in Fig. 5c and then a mould cover 17 is placed on the mould 10, as shown in Fig. 5d. Subsequently, molten plastic material (not shown) may be injected into the mould 10, thus providing a crate having a circumferential label.

Instead of assembling the mould 10 from separate wall sections 11, as shown in Fig. 5a, it is possible to use a single, integral circumferentially closed wall section (not shown).

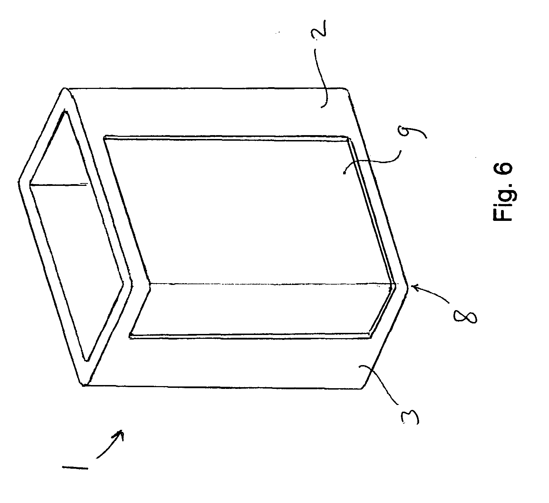

The crate 1 schematically shown in Fig. 6 comprises side walls 2, a front wall 3, a back wall, and a base (not shown). The crate 1 is provided with labels 9, at least one of which extends over both a side wall 2 and the front wall 3 and thereby covers a corner 8 of the crate. The walls of the crate 1 are preferably designed in such a way that the label 9 is slightly recessed so as to prevent damage.

As mentioned above, the plastic material used in the present invention preferably is HDPE (High Density PolyEthylene), but other suitable materials may also be used. The mould is preferably made of metal, for example steel.

It will be understood by those skilled in the art that the present invention is not limited to the embodiments illustrated above and that many modifications and additions may be made without departing from the scope of the invention as defined in the appending claims.

## Claims

1. A method of producing a plastic crate (1) provided with at least one label (9), the method comprising the steps of:
• placing the at least one label against a wall part (11, 12, 13) of a mould (10),
• closing the mould,
• injecting a plastic material into the mould, and
• opening the mould,
wherein the mould (10) comprises at least one wall part (12) which extends in two intersecting planes so as to allow the at least one label (9) to cover a corner (5) of the crate.

2. The method according to claim 1, wherein the two intersecting planes are arranged at a right angle.

3. The method according to claim 1, wherein the two intersecting planes are arranged at an acute or obtuse angle.

4. The method according to claim 1, 2 or 3, wherein the at least one wall part (12) is substantially rounded.

5. The method according to any of the preceding claims, wherein the mould (10) comprises two wall parts (12) which each extend in two intersecting planes so as to provide two labels (9) covering respective corners (8) of the crate (1).

6. The method according to any of the preceding claims, wherein the mould (10) comprises a single, circumferentially closed wall part.

7. A mould (10) for use in the method according to any of the preceding claims.

8. A crate (1) produced according to the method of any of claims 1 - 6.
